# EUROPÄISCHE PATENTSCHRIFT

(11) **EP 2 657 652 B1**
(45) Veröffentlichungstag und Bekanntmachung des Hinweises auf die Patenterteilung: **28.10.2015**
(21) Anmeldenummer: 12166058.3
(22) Anmeldetag: 27.04.2012
(51) Int. Cl.: G01D 5/28, G01D 5/30, G01D 5/34, G01D 5/347

(54) **Vorrichtung zur Messung des Drehwinkels zweier relativ zueinander um eine Drehachse rotierender Objekte**
Device for measuring the relative angle of two objects which can be rotated relative to each other around a rotation axis
Dispositif de mesure de l'angle de rotation de deux objets tournant l'un par rapport à l'autre autour d'un axe

(43) Veröffentlichungstag der Anmeldung: 30.10.2013
(73) Patentinhaber: SICK STEGMANN GmbH, 78166 Donaueschingen (DE)
(72) Erfinder: Hopp, David, 78166 Donaueschingen (DE)
(74) Vertreter: Westphal, Mussgnug & Partner Patentanwälte mbB

(56) Entgegenhaltungen:
- EP-A2- 2 372 314
- DE-U1- 20 102 192
- JP-A- 8 050 036

## Beschreibung

Die Erfindung betrifft eine Vorrichtung zur Messung des Drehwinkels zweier relativ zueinander um eine Drehachse rotierender Objekte gemäß dem Oberbegriff des Patentanspruchs 1.

Die Erfassung des Drehwinkels zweier relativ zueinander um eine Drehachse rotierender Objekte, bspw. einer sich drehenden Motorwelle relativ zu einem feststehendem Element, kann mit Hilfe eines berührungslosen optischen Sensors basierend auf den Polarisationseigenschaften des Lichts geschehen. Beispiele für derartige Vorrichtungen zeigen die DE 100 05 277 A1, DE 201 02 192 U1, EP 2 187 178 A1, EP 1 507 137 A1 oder US 7,777,879.

Bekannte Vorrichtungen zur Messung des Drehwinkels zweier relativ zueinander um eine Drehachse rotierender Objekte weisen eine dem einen Objekt zugeordnete Lichtquelle, einen dem anderen Objekt zugeordneten Polarisator, wobei sich die Lichtquelle und der Polarisator in Abhängigkeit vom Drehwinkel relativ zueinander drehen, und einen Empfänger auf, der die durch den Polarisator durchtretende oder reflektierte Lichtintensität misst, um ein drehwinkelabhängiges Signal zu erzeugen, wobei der Empfänger wenigstens ein erstes Empfangselement aufweist, vor welchem ein Polarisationsfilter mit einer ersten Polarisationsrichtung angeordnet ist. Je nach relativer Winkelstellung zwischen dem Polarisator und dem Polarisationsfilter des Empfangselements ergibt sich auf dem Empfangselement eine unterschiedliche Beleuchtungsintensität. Ist der Polarisator an einem sich drehenden Objekt, bspw. einer Motorwelle, angeordnet, lässt sich der Drehwinkel des sich drehenden Objekts bestimmen. Aufgrund der physikalischen Eigenschaften der Polarisation weisen die drehwinkelabhängigen Signale zwei Perioden pro Umdrehung um 360° auf und sind damit inkremental.

Ein Problem einer Vorrichtung zur Messung des Drehwinkels zweier relativ zueinander um eine Drehachse rotierender Objekte basierend auf den Polarisationseigenschaften des Lichts besteht in der Toleranzierung der mechanischen Bewegungen, da ein Versatz in Richtung der optischen Achse oder eine nicht perfekt homogene Beleuchtung zu Intensitätsmodulationen führt, welche den gewünschten Signalen überlagert sind. Zusätzlich ergeben sich bei einem reflektierenden Polarisator zwangsläufig unterschiedliche Einfallswinkel des Lichts auf den Polarisator und den Polarisationsfilter des Empfangselements. Dies führt ebenfalls je nach geometrischer Konstellation und Art der Polarisation zu einer Variation der Intensität in den Empfangselementen.

Die Aufgabe der Erfindung besteht darin, eine Eindeutigkeit über eine volle Umdrehung um 360° des rotierenden Objekts und somit ein absolutes Winkelsignal zu ermöglichen, wobei vorzugsweise gleichzeitig ein absolutes und ein inkrementales Signal ermittelt werden soll, ohne Einbußen bei der Signalqualität zu verursachen.

Die Aufgabe der Erfindung wird gelöst durch eine Vorrichtung zur Messung des Drehwinkels zweier relativ zueinander um eine Drehachse rotierender Objekte mit den Merkmalen des Patentanspruchs 1 sowie ein Verfahren zur Messung des Drehwinkels zweier relativ zueinander um eine Drehachse rotierender Objekte mit den Merkmalen des Patentanspruchs 13.

Vorteilhafte Ausgestaltungen und Weiterbildungen der Erfindung sind in den abhängigen Ansprüchen angegeben.

Die erfindungsgemäße Vorrichtung zur Messung des Drehwinkels zweier relativ zueinander um eine Drehachse rotierender Objekte, mit einer dem einen Objekt zugeordneten Lichtquelle, mit einem dem anderen Objekt zugeordneten Polarisator, wobei sich die Lichtquelle und der Polarisator in Abhängigkeit vom Drehwinkel relativ zueinander drehen, und mit einem Empfänger, der die durch den Polarisator durchtretende oder reflektierte Lichtintensität misst, um ein drehwinkelabhängiges Signal zu erzeugen, wobei der Empfänger wenigstens ein erstes Empfangselement aufweist, vor welchem ein Polarisationfilter mit einer ersten Polarisationsrichtung angeordnet ist, zeichnet sich dadurch aus, dass der Polarisator als Scheibe mit einer Normalen ausgebildet ist, wobei die Normale der Scheibe in einem ersten von 0° verschiedenen Winkel zu der Drehachse angeordnet ist, und dass der Empfänger wenigstens ein zweites Empfangselement aufweist, vor welchem ein Polarisationsfilter angeordnet ist, welcher vorzugsweise die erste Polarisationsrichtung aufweist, wobei das zweite Empfangselement in einem Winkelabstand mit einem zweiten Winkel bezüglich eines Symmetriezentrums, welches insbesondere durch die optische Achse der Lichtquelle oder die Drehachse des rotierenden Objekts bestimmt wird, zu dem ersten Empfangselement angeordnet ist. Dadurch, dass der Polarisator mit seiner Normalen in einem von 0° verschiedenen Winkels zu der Drehachse angeordnet ist, ergibt sich bei Drehung des Polarisators um die Drehachse eine Taumelbewegung, welche eine sinusförmige Intensitätsmodulation auf jedem der Empfangselemente hervorruft, welche bei einer Umdrehung um 360° genau eine Periode aufweist. Diese Taumelbewegung verursacht somit eine Brechung der Symmetrie, die gezielt zur Generierung einer eindeutigen Winkelinformation über 360° genutzt wird. Zusätzlich weist der Empfänger ein zweites Empfangselement in einem Winkelabstand zu dem ersten Empfangselement auf, so dass zwischen den beiden Lichtintensitätssignalen der beiden Empfangselemente eine unterschiedliche Phasenlage erzeugt wird, welche eine eindeutige Winkelinformation über 360° auch bei jedem Nulldurchgang ermöglichen.

Vorzugsweise ist der erste Winkel größer als 0° und kleiner als 45°, liegt vorzugsweise zwischen 3° und 20° und beträgt besonders bevorzugt etwa 5°. Ein derartiger Winkel führt bereits zu einer signifikanten Intensitätsmodulation der Lichtintensitäten der unterschiedlichen Empfangselemente, die eine eindeutige Winkelinformation über 360° ermöglicht.

Gemäß einer bevorzugten Ausführungsform beträgt der zweite Winkel 90°, so dass auch die Phasendifferenz der Lichtintensitätssignale des ersten Empfangselements und des zweiten Empfangselements 90° beträgt, was eine vereinfachte Auswertung der detektierten Signale ermöglicht.

Vorzugsweise weist die Lichtquelle eine optische Achse auf, welche mit der Drehachse übereinstimmt, was einen kompakten Aufbau der Vorrichtung ermöglicht.

Gemäß einer bevorzugten Ausführungsform der Erfindung ist die Lichtquelle in einer ersten Ebene angeordnet und der Empfänger in einer zweiten Ebene angeordnet, wobei die erste Ebene entweder der zweiten Ebene entspricht oder parallel versetzt zu dieser angeordnet ist. Eine derartige Anordnung ermöglicht ebenfalls einen kompakten Aufbau der Vorrichtung.

Vorzugsweise weist die Lichtquelle ein divergentes Strahlprofil und/oder ein rotationssymmetrisches Strahlprofil auf, um eine gute Ausleuchtung aller Empfangselemente zu ermöglichen.

Gemäß einer besonders bevorzugten Ausführungsform der Erfindung ist das erste Empfangselement Teil einer ersten Gruppe von n Empfangselementen, wobei vor jeden der n Empfangselemente ein Polarisationselement angeordnet ist und die Polarisationsrichtungen der Polarisationselemente gegeneinander verdreht sind, vorzugsweise jeweils um 180°/n, wobei n die Anzahl der Empfangselemente der ersten Gruppe ist, und das zweite Empfangselement Teil einer zweiten Gruppe von m Empfangselementen ist, wobei vor jedem der m Empfangselemente ein Polarisationselement angeordnet ist und die Polarisationsrichtungen der Polarisationselemente gegeneinander verdreht, vorzugsweise jeweils um 180°/m, wobei m die Anzahl der Empfangselemente der zweiten Gruppe ist, wobei vorzugsweise Empfangselemente mit gleichen Polarisationsrichtungen jeweils den gleichen Winkelabstand zueinander aufweisen. n und/oder m kann bspw. 2 oder eine Potenz von 2 betragen. Bei Verwendung von zwei Gruppen mit jeweils zwei Empfangselementen, deren Polarisationsrichtungen jeweils um 90° verdreht sind, und wobei die Gruppen im Winkelabstand von 90° angeordnet sind, ergibt sich die Möglichkeit der Bestimmung des absoluten Drehwinkels auch bei Verwendung von idealen Polarisatoren.

Vorzugsweise weist der Empfänger wenigstens vier oder mehr Gruppen von Empfangselementen auf, wobei die Gruppen vorzugsweise gleich viele Empfangselemente aufweist und vorzugsweise symmetrisch, insbesondere um die Drehachse oder die optische Achse, angeordnet sind. Bei Verwendung von genau vier Gruppen mit jeweils zwei Empfangselementen ergibt sich bereits die Möglichkeit einer für die Signalauswertung vorteilhaften Offsetkompensation.

Durch den Einsatz mehrerer Gruppen mit mehreren Empfangselementen lässt sich die Genauigkeit der Vorrichtung sowohl hinsichtlich der inkrementalen als auch der absoluten Signale steigern. Es kann hierfür die Anzahl identischer Gruppen und/oder die Anzahl von Empfangselementen mit unterschiedlich detektierbarer Polarisationsrichtung erhöht werden, so dass sich vielfache Möglichkeiten für Differenzauswertungen z.B. zur Offsetkompensation oder zur Minimierung von Einflüssen lokaler optischer Störungen wie bspw. von lokalem Streulicht oder Schmutz auf dem Polarisator oder vielfache Möglichkeiten für Redundanzen beispielsweise durch Addition zweier oder mehrerer gleichartiger Signale ergeben.

Vorzugsweise sind jeweils zwei Empfangselemente mit gleicher Polarisationsrichtung punktsymmetrisch, vorzugsweise zu der Drehachse oder der optischen Achse, angeordnet. Symmetrische Anordnungen erleichtern die entsprechend Signalauswertung.

Gemäß einer bevorzugten Ausführungsform sind die Empfangselemente auf wenigstens einer, vorzugsweise auf zwei oder mehreren, rechteckigen, vorzugsweise quadratischen, oder kreisförmigen Spuren, vorzugsweise um die Drehachse oder die optische Achse, angeordnet. Auch dies führt insbesondere zu einem symmetrischen Aufbau und erleichtert die Signalauswertung.

Vorzugsweise weist der Empfänger eine oder mehrere Referenzphotodioden auf, um weitere Korrekturen oder Kompensationsmöglichkeiten, insbesondere bei lokalen oder globalen Intensitätsschwankungen, bereit zu stellen. Die Referenzphotodioden sind lediglich optional und können in Abhängigkeit von der Anordnung der Empfangselemente mit davor angeordneten Polarisationselementen in ggf. vorhandenen freien Flächen angeordnet werden.

Gemäß einer bevorzugten Ausführungsform der Erfindung sind die Lichtquelle, der Empfänger und eine Auswerteschaltung als integrierte Schaltung ausgebildet, was zu einem hochintegrierten und kostengünstigen System führt.

Das erfindungsgemäße Verfahren zur Messung des Drehwinkels zweier relativ zueinander um eine Drehachse rotierende Objekte mit einer Vorrichtung gemäß einem der vorhergehenden Ansprüche, wobei die vom Empfänger gemessene Lichtintensität als drehwinkelabhängiges Signal ausgewertet wird, zeichnet sich dadurch aus, dass die von den einzelnen Empfangselementen gemessenen Lichtintensitäten als drehwinkelabhängige Signale ausgewertet werden. Dadurch ergibt sich auf einfache Art und Weise die Möglichkeit, den Drehwinkel über eine volle Drehung von 360° absolut zu bestimmen und gleichzeitig ein absolutes und inkrementales Signal zu generieren, ohne Einbußen bei der Signalqualität zu verursachen.

Gemäß einer bevorzugten Ausführungsform des erfindungsgemäßen Verfahrens werden die Empfangssignale der Empfangselemente einer Gruppe zu einem ersten Summensignal summiert. Das erste Summensignal ergäbe ohne ein Taumeln des Polarisators idealerweise einen konstanten Wert. Die erfindungsgemäß eingeführte Taumelbewegung des Polarisators führt dazu, dass die Summe der Empfangssignale der Empfangselemente einer Gruppe direkt ein sinusförmiges Signal liefert, dessen Periode einer Umdrehung des Polarisators entspricht. Somit wird auf diese Weise insbesondere ein Absolutsignal erzeugt.

Vorzugsweise wird aus den ersten Summensignalen zweier verschiedener Gruppen, insbesondere punktsymmetrisch zur Drehachse zueinander angeordneter Gruppen, ein erstes Differenzsignal gebildet, um die Absolutsignale offsetkompensiert bestimmen zu können.

Vorzugsweise wird aus den Empfangssignalen zweier der Empfangselemente einer Gruppe, insbesondere zweier Empfangselemente, deren Polarisationsrichtungen senkrecht zueinander stehen, ein zweites Differenzsignal gebildet, welches eine Ermittlung der inkrementalen Winkelpositionen basierend auf einem korrigierten Sinusquadratsignal ermöglicht.

Vorzugsweise wird aus zwei zweiten Differenzsignalen zweier verschiedener Gruppen, insbesondere punktsymmetrisch zur Drehachse zueinander angeordneter Gruppen, ein zweites Summensignal gebildet, um die Signalamplitude zu erhöhen und lokale Fehlereinflüsse zu minimieren.

Durch mehrfach kaskadierte Berechnung von Differenzsignalen oder Summensignalen lässt sich die Signalstabilität, insbesondere bei Verwendung von mehreren Gruppen mit mehreren Empfangselementen, weiter steigern.

Vorzugsweise werden die Empfangssignale der Empfangselemente, welche gleiche Polarisationsrichtungen aufweisen, gemittelt, um die Genauigkeit der Winkelbestimmung weiter zu erhöhen.

Die Erfindung wird anhand der nachfolgenden Figuren ausführlich erläutert. Es zeigt
- Figur 1a: eine schematische Darstellung einer Vorrichtung zu Messung des Drehwinkels zweier relativ zueinander um eine Drehachse rotierender Objekte gemäß einem ersten Ausführungsbeispiel der Erfindung,
- Figur 1b: eine Draufsicht auf den Polarisator der Vorrichtung gemäß Fig. 1a,
- Figur 1c: eine schematische Darstellung einer Vorrichtung zur Messung des Drehwinkels zweier relativ zueinander um eine Drehachse rotierender Objekte gemäß einem zweiten Ausführungsbeispiel der Erfindung,
- Figur 2a: eine schematische Darstellung eines Empfängers für eine Vorrichtung gemäß Fig. 1a oder 1c gemäß einem ersten Ausführungsbeispiel,
- Figur 2b: ein zweites Ausführungsbeispiel eines Empfängers für die Vorrichtung gemäß Fig. 1a oder 1c,
- Figur 2c: ein drittes Ausführungsbeispiel eines Empfängers für eine Vorrichtung gemäß Fig. 1a oder 1c,
- Figur 3a: die relativen Intensitäten zweier der Empfangselemente des Empfängers gemäß Fig. 2b oder 2c in Abhängigkeit vom Drehwinkel,
- Figur 3b: die relativen Intensitäten zweier der Empfangselemente des Empfängers gemäß Fig. 2b oder 2c in Abhängigkeit vom Drehwinkel,
- Figur 3c: die relativen Intensitäten zweier der Empfangselemente des Empfängers gemäß Fig. 2c in Abhängigkeit vom Drehwinkel,
- Figur 3d: die relativen Intensitäten zweier der Empfangselemente des Empfängers gemäß Fig. 2c in Abhängigkeit vom Drehwinkel,
- Figur 4a: relative Intensitäten von Summensignalen von Empfangselementen des Empfängers gemäß Fig. 2c in Abhängigkeit vom Drehwinkel,
- Figur 4b: relative Intensitäten von Summensignalen von Empfangselementen des Empfängers gemäß Fig. 2c in Abhängigkeit vom Drehwinkel,
- Figur 5: relative Intensitäten von Differenzsignalen von Summensignalen von Empfangselementen des Empfängers gemäß Fig. 2c in Abhängigkeit vom Drehwinkel,
- Figur 6: relative Intensitäten in Abhängikeit vom Drehwinkel von Inkrementalsignalen,
- Figur 7a: ein viertes Ausführungsbeispiel von Differenzsignalen von Empfangselementen des Empfängers gemäß Fig. 2c und eines Summensignals zweier Differenzsignale von Empfangselementen eines Empfängers gemäß Fig. 2c in Abhängigkeit vom Drehwinkel,
- Figur 7b: ein fünftes Ausführungsbeispiel eines Empfängers für eine Vorrichtung gemäß Fig. 1a oder 1c,
- Figur 8a: ein sechstes Ausführungsbeispiel eines Empfängers für eine Vorrichtung gemäß Fig. 1a oder 1c,
- Figur 8b: ein siebtes Ausführungsbeispiel eines Empfängers für eine Vorrichtung gemäß Fig. 1a oder 1c und
- Figur 8c: ein achtes Ausführungsbeispiel eines Empfängers für eine Vorrichtung gemäß Fig. 1a oder 1c.

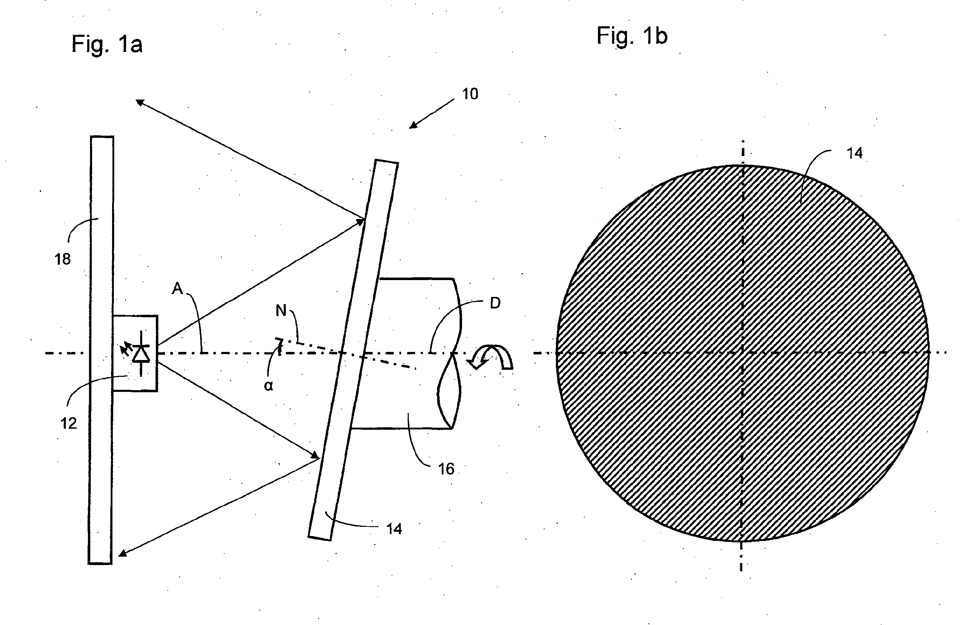

Figur 1a zeigt eine schematische Darstellung einer Vorrichtung 10 zur Messung des Drehwinkels zweier relativ zueinander um eine Drehachse D rotierender Objekte, insbesondere die Drehung einer Welle 16 um die Drehachse D relativ zu einem feststehenden Objekt. An der Welle 16 ist ein Polarisator 14 angeordnet, welcher in Draufsicht in Figur 1b dargestellt ist, und welcher als linearer Polarisator ausgebildet ist. Der Polarisator 14 ist insbesondere als Scheibe ausgebildet und weist ein Normale N auf, welche in einem ersten Winkel α zur Drehachse D angeordnet ist. Der Polarisator 14 ist somit gegen die Drehachse D verkippt. Der Polarisator 14 kann vorzugsweise als runde Scheibe ausgebildet sein, wie in Figur 1b dargestellt. Alternativ kann jedoch die Geometrie des Polarisators 14 beliebige Formen auch im Hinblick auf Wölbungen und Außenkonturen annehmen. Der Polarisator 14 kann weiterhin derart an der Welle 16 angeordnet sein, dass die Normale N nicht zwangsläufig einen Schnittpunkt mit der Drehachse D aufweist.

Der Polarisator 14 wird mit einer Lichtquelle 12 beleuchtet. Die Lichtquelle 12 weist eine optische Achse A auf, welche bei der Vorrichtung 10 mit der Drehachse D identisch ist. Die Lichtquelle 12 ist vorzugsweise als unpolarisierte Lichtquelle 12, bspw. als LED, ausgebildet, kann jedoch auch als eine Glühlampe oder als kohärente Lichtquelle, bspw. als Laser oder Laserdiode, ausgebildet sein. Die Lichtquelle 12 sendet vorzugsweise einen divergenten Lichtkegel aus, um den Polarisator 14 großflächig zu beleuchten. Vorzugsweise ist der Lichtkegel der Lichtquelle 12 homogen. Das Intensitätsprofil der Lichtquelle 12 ist vorzugsweise rotationssymmetrisch, bspw. mit einer Lambert- oder Gaußverteilung und hat vorzugsweise ihren Intensitätsschwerpunkt auf der optischen Achse A. Die Beleuchtung durch die Lichtquelle 12 kann auch kollimiert oder in Teilen konvergent ausgeführt sein. Eine Strahlformung der Lichtquelle 12 ist nicht zwingend notwendig. Je nach Ausführungsform kann jedoch für die Lichtquelle 12 eine Spiegeloptik, eine refraktive oder defraktive Linse oder eine Kombination daraus verwendet werden, wobei vorteilhafterweise die Strahlformung möglichst wenig polarisierend wirkt.

Bei der in Figur 1a dargestellten Vorrichtung 10 ist die Lichtquelle 12 auf einem Träger 18 angeordnet, auf welchem auch ein Empfänger angeordnet ist. Die Ebene der Lichtquelle 12 und die Ebene des Empfängers fallen somit bei dieser Ausführungsform zusammen. Möglich ist jedoch auch, dass die Ebene der Lichtquelle 12 und die Ebene des Empfängers parallel gegeneinander versetzt sind. Bei den dargestellten Ausführungsbeispielen ist die Lichtquelle 12 mittig auf dem Träger 18 angeordnet. Ein symmetrischer Aufbau vereinfacht die Auswertung, ist jedoch nicht zwingend erforderlich. Bei parallel zueinander versetzten Ebenen zwischen Lichtquelle 12 und Empfänger ist eine Beleuchtung durch ein transparente Aussparung in der Ebene des Empfängers oder durch eine Strahlführung mittels Lichtleitern, Spiegeln, Prismen oder ähnlichem denkbar.

Der Polarisator 14 ist reflektierend ausgebildet und kann insbesondere spiegel-reflektierend, diffus-reflektierend oder streuend-reflektierend ausgelegt sein.

Die Lichtquelle 12 und der Empfänger können vorzugsweise insbesondere einschließlich benötigter Schaltkreise zur Signalauswertung auf einer einzigen Ebene, beispielsweise auf dem Träger 18, integriert aufgebaut werden, was zu einem integrierten und kostengünstigen System führt.

Das Licht der Lichtquelle 12 wird durch den Polarisator linear polarisiert und reflektiert, so dass es auf den Empfänger fällt. Ausführungsbeispiele der Sende-Empfangseinheit, welche die Lichtquelle 12 und den Empfänger aufweist, werden nachfolgend beschrieben.

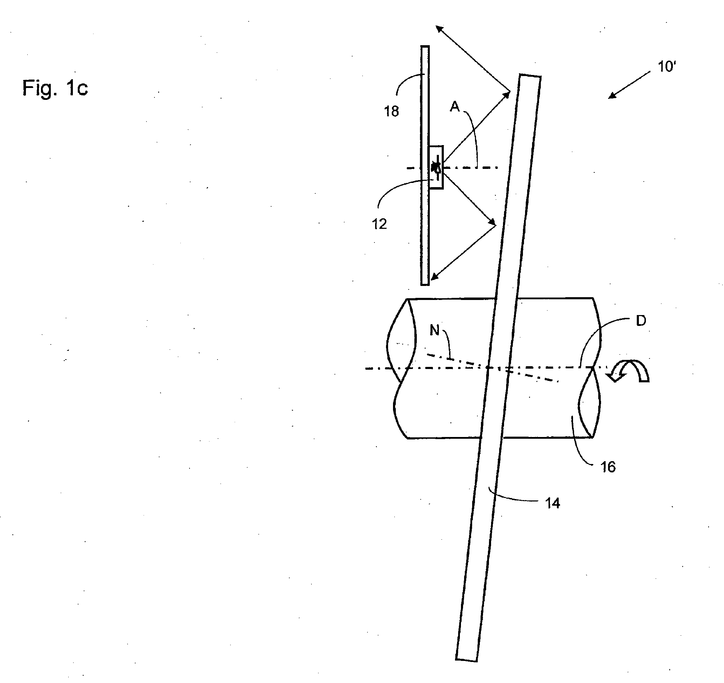

Figur 1c zeigt eine alternative Ausführungsform einer Vorrichtung 10' zur Messung des Drehwinkels der Welle 16, welche sich von der in Figur 1a dargestellten Vorrichtung 10 lediglich dadurch unterscheidet, dass der Polarisator 14 nicht auf der Stirnfläche der Welle 16 angeordnet ist, sondern dass die Welle 16 durch eine vorzugsweise zentrische Ausnehmung des Polarisators 14 hindurchgeführt ist und die Lichtquelle 12 und der Empfänger derart angeordnet sind, dass die optische Achse A der Lichtquelle 12 nicht mit der Drehachse D zusammenfällt und insbesondere parallel versetzt zur Drehachse D angeordnet ist, so dass sich eine exzentrische Beleuchtung des Polarisators 14 ergibt. Die Welle 16 kann in dieser Ausführungsform als Hohlwelle ausgebildet sein.

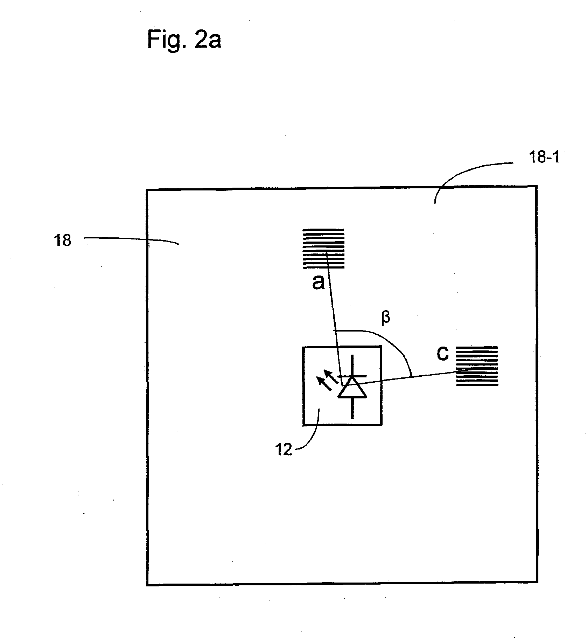

Figur 2a zeigt ein erstes Ausführungsbeispiel einer Sende-Empfangseinheit 18-1, welche in den Vorrichtungen 10, 10' gemäß den Figuren 1a und 1c eingesetzt werden kann. Die Sende-Empfangseinheit 18-1 weist einen Träger 18 auf, auf welchem die Lichtquelle 12 vorzugsweise mittig angeordnet ist. Die Sende-Empfangseinheit 18-1 weist weiterhin zwei Empfangselemente a, c auf, vor welchen jeweils ein Polarisationsfilter angeordnet ist, welche die gleiche Polarisationsrichtung aufweisen. Die Empfangselemente a, c sind in einem Winkelabstand in einem zweiten Winkel β bezüglich der optischen Achse A, welche bei Verwendung der Sende-Empfangseinheit 18-1 in der Vorrichtung gemäß Figur 1a mit der Drehachse D zusammen fällt, angeordnet. Der Winkelabstand beträgt bei dem Ausführungsbeispiel 90°.

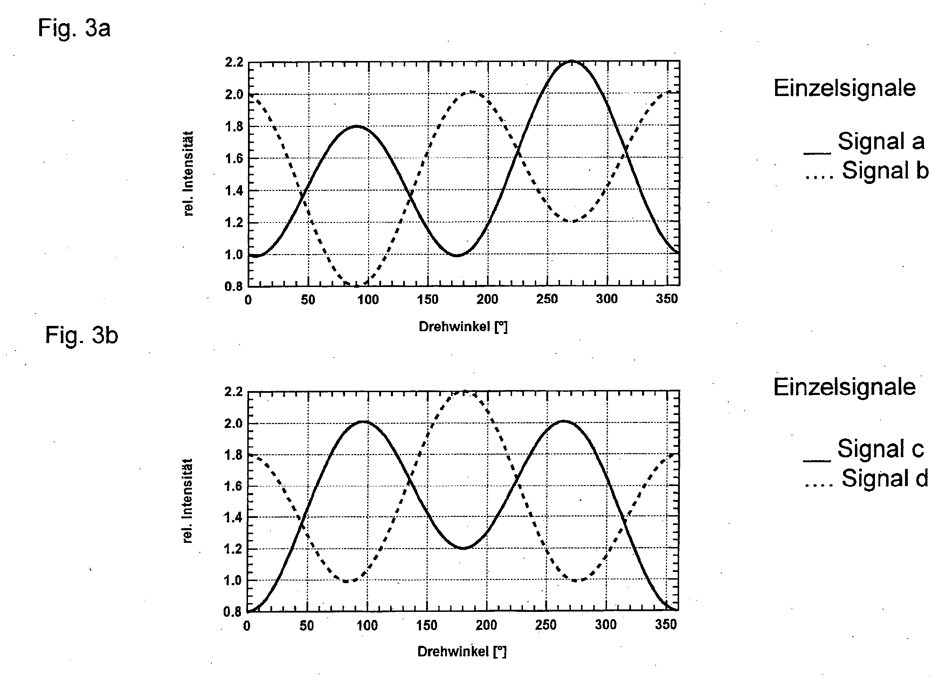

Bei Drehung der Welle 16 und somit des Polarisators 14 ergeben sich sowohl für das erste Empfangselement a als auch das zweite Empfangselement b jeweils ein Sinusquadrat-Signal mit einer sinusförmigen Intensitätsmodulation aufgrund der Taumelbewegung des Polarisators 14. Die relativen Intensitäten der Empfangselemente a, c in Abhängigkeit vom Drehwinkel sind insbesondere in den Figuren 3a und 3b dargestellt. Dieser Aufbau liefert somit zwei Sinusquadrat-Signale, welche ein inkrementales Winkelsignal liefern.

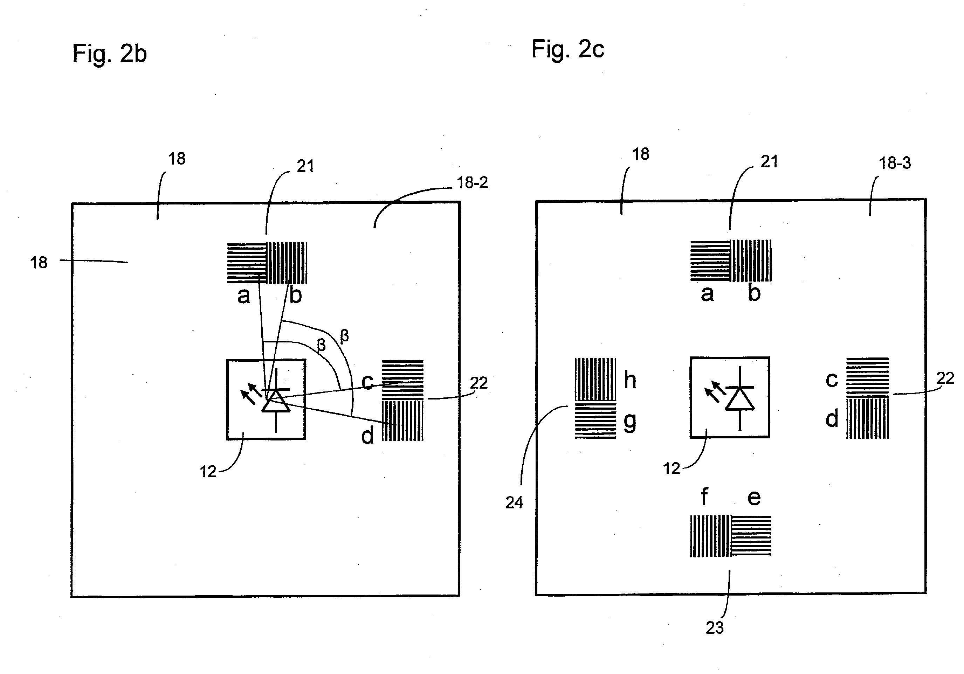

Figur 2b zeigt ein zweites Ausführungsbeispiel einer Sende-Empfangseinheit 18-2, welches sich von der Sende-Empfangseinheit 18-1 gemäß Figur 2a dadurch unterscheidet, dass das erste Empfangselement a Teil einer ersten Gruppe 21 mit n, vorliegend mit zwei Empfangselementen a, b, ist, wobei die Polarisationsrichtungen der beiden Empfangselemente a, b gegeneinander verdreht sind, insbesondere um 180°/n mit n=2, dass heißt um 90°. Weiterhin ist das Empfangselement c Teil einer zweiten Gruppe 22 mit n, vorliegend mit zwei Empfangselementen c, d, deren Polarisationsrichtungen ebenfalls gegeneinander verdreht sind, insbesondere um 180°/n mit n=2, dass heißt um 90°. Auch die Lichtintensitäten der Empfangselemente c, d liefern in Abhängigkeit vom Drehwinkel sinusquadratförmige Signale, welche sinusförmig moduliert sind aufgrund der Taumelbewegung des Polarisators 14 (vgl. Fig. 3a und 3b).

Die beiden Empfangselemente a, b liefern zwei um 90° versetzte Sinusquadratsignale (vgl. Figur 3a). Gleiches gilt für die Empfangselemente c, d (vgl. Figur 3b).

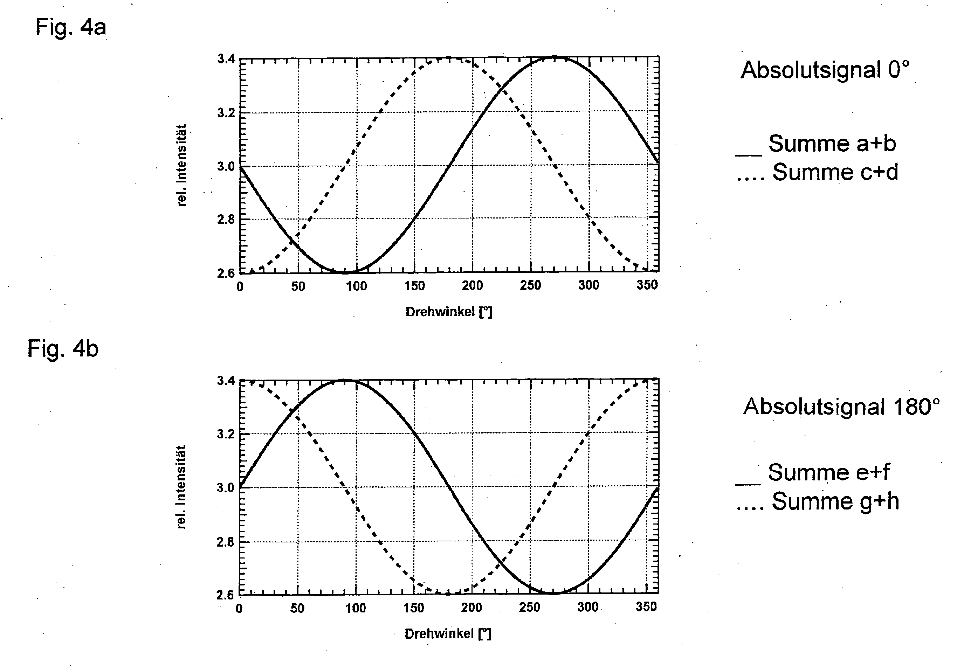

Die Summe der Signale der Empfangselemente a, b ergäbe ohne eine Taumelbewegung des Polarisators 14 eine konstante Funktion. Da aufgrund der Taumelbewegung des Polarisators 14 den beiden Einzelsignalen jeweils eine sinusförmige Intensitätsmodulation überlagert wird, liefert die Summe der beiden Empfangselemente a, b, d. h. a+b, welches als erstes Summensignal bezeichnet wird, ein sinusförmiges Signal, dessen Periode einer vollen Umdrehung um 360° des Polarisators 14 entspricht (vgl. Figur 4a). Gleiches gilt für das erste Summensignal c+d der Empfangselemente c, d (vgl. Figur 4a). Für die beiden Empfangselementspaare a, b einerseits und c, d andererseits sind die überlagerten sinusförmigen Signale um 90° phasenversetzt (vg. Figur 4a). Damit lässt sich analog zur Ermittlung der inkrementalen Winkelposition aus den Sinusquadratsignalen (vgl. 3a und 3b) nun auch eine absolute Winkelposition ermitteln (vgl. Figur 4a).

Figur 2c zeigt ein drittes Ausführungsbeispiel einer Sende-Empfangseinheit 18-3, welches sich von dem Ausführungsbeispiel gemäß Figur 2b dadurch unterscheidet, dass zwei weitere Gruppen 23, 24 mit jeweils zwei weiteren Empfangselementen e, f und g, h vorhanden sind. Die dritte Gruppe 23 weist die Empfangselemente e, f auf, während die vierte Gruppe 24 die Empfangselemente g, h aufweist. Die Polarisationsrichtungen der Empfangselemente e, g entsprechen der Polarisationsrichtung der Empfangselemente a, c. Die Polarisationsrichtungen der Empfangselemente f, h entsprechen den Polarisationsrichtungen der Empfangselemente b, d. Die Empfangselemente a, c, e, g mit gleicher Polarisationsrichtung sind symmetrisch um ein Symmetriezentrum angeordnet, insbesondere jeweils im gleichen Winkelabstand zueinander, insbesondere im Winkelabstand von 90°. Gleiches gilt für die Empfangselemente b, d, f, h mit gleicher Polarisationsrichtung. Dabei sind jeweils zwei Empfangselemente mit gleicher Polarisationsrichtung punktsymmetrisch zu dem Symmetriezentrum angeordnet. Das Symmetriezentrum liegt insbesondere auf der optischen Achse A und besonders bevorzugt auf der Drehachse D.

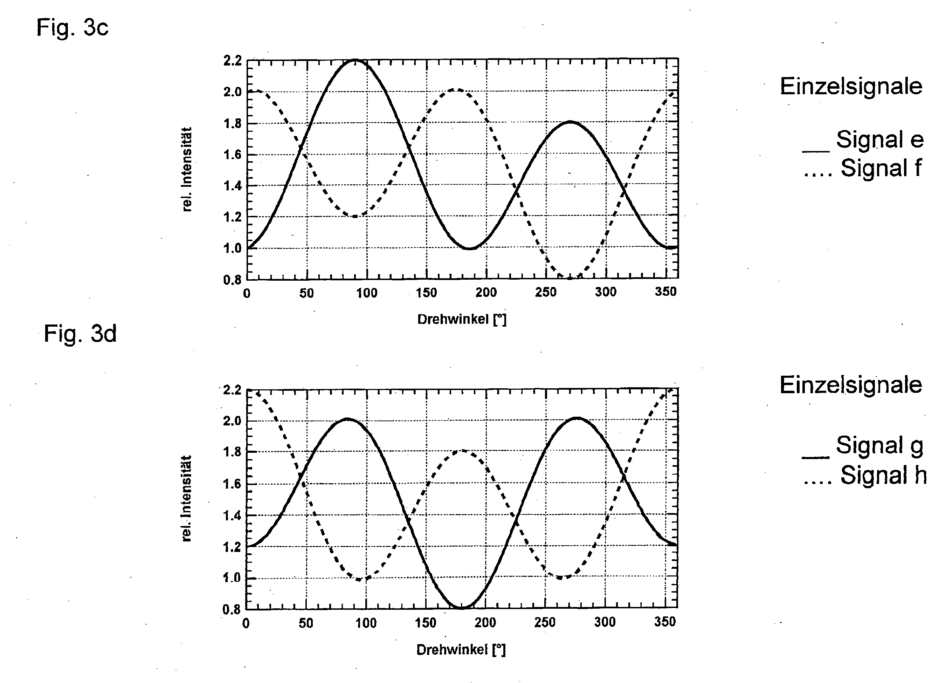

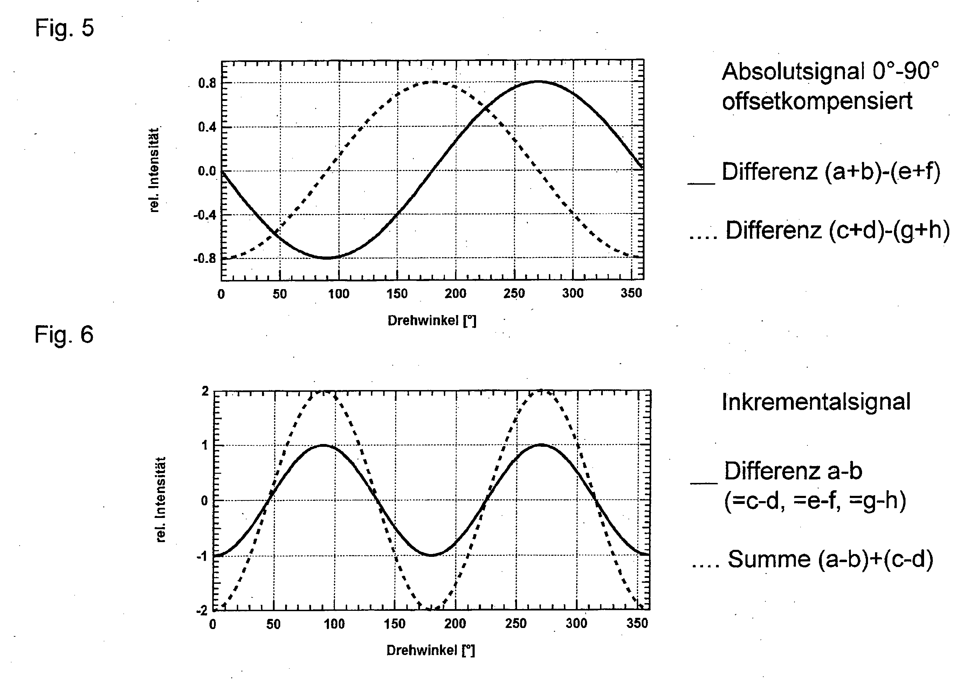

Da davon ausgegangen wird, dass ein Signaloffset durch einen Gleichlichtanteil der Beleuchtung, beispielsweise auch durch Streulicht oder ähnliches, die Auswertung der Absolutsignale beeinträchtigt, sind die dritte Gruppe 23 und die vierte Gruppe 24 vorgesehen, welche jeweils redundante Signale zu den Empfangselementen a, b, c, d der ersten Gruppe 21 und der zweiten Gruppe 22 liefern (vgl. Figuren 3c, 3d sowie Figur 4b). Insbesondere liefert die dritte Gruppe 23 ein erstes Summensignal von e+f und die vierte Gruppe 24 ein erstes Summensignal von g+h (vgl. Fig. 4b). Mit Hilfe der ersten Summensignalen verschiedener Gruppen, insbesondere der punktsymmetrisch zum Symmetriezentrum zueinander angeordneten Gruppen, können auch die absoluten Signale offsetkompensiert werden, wie in Figur 5 dargestellt. Dazu werden aus den ersten Summensignalen verschiedener Gruppen, beispielsweise dem ersten Summensignal a+b der ersten Gruppe 21 und dem ersten Summensignal e+f der dritten Gruppe 23 oder dem ersten Summensignal c+d der zweiten Gruppe 22 und dem ersten Summensignal g+h der vierten Gruppe 24, jeweils erste Differenzsignale (a+b)-(e+f) oder (c+d)-(g+h) gebildet, welche in Figur 5 dargestellt sind und die einem offsetkompensierten Absolutsignal entsprechen.

Innerhalb einer Gruppe von Empfangselementen können nicht nur die ersten Summensignale durch Addition der Empfangssignale der Empfangselemente einer Gruppe berechnet werden, sondern ebenfalls als zweites Differenzsignal die Differenz zweier der Empfangselemente einer Gruppe, insbesondere zweier Empfangselemente, deren Polarisationsrichtungen senkrecht zueinander stehen. Für die erste Gruppe 21 ergibt sich als zweites Differenzsignal a-b, für die zweite Gruppe 22 ergibt sich als zweites Differenzsignal c-d, für die dritte Gruppe 23 ergibt sich als zweites Differenzsignal e-f und für die vierte Gruppe 24 ergibt sich als zweites Differenzsignal g-h. Dies führt zu einem korrigierten Sinusquadratsignal und somit zu einem korrigierten Inkrementalsignal, welches beispielsweise in Figur 6 dargestellt ist. Die zweiten Differenzsignale verschiedener Gruppen, insbesondere punktsymmetrisch zueinander angeordnete Gruppen, können zu zweiten Summensignalen, beispielsweise zu (a-b)+(c-d), addiert werden, wodurch die Signalamplitude erhöht wird und wodurch gegebenenfalls Fehlereinflüsse minimiert werden können(vgl. Figur 6).

Durch mehrfache kaskadierte Berechnung von Differenzsignalen oder Summensignalen, je nach Anzahl zur Verfügung stehender Detektoren, lässt sich die Signalstabilität weiter steigern.

Ein von 90° abweichender Beleuchtungswinkel führt bei den meisten Polarisatoren zu einer Veränderung des Polarisationskontrasts. Zwar gilt dies nur für größere Winkel, beispielsweise bei Wire-Grid-Polarosatoren bei einem Winkel von mehr als 20°, prinzipbedingt lässt sich dieser Effekt allerdings nicht vermeiden. Die Drehung des verkippten Polarisators führt zu einer dynamischen Änderung des Beleuchtungswinkels, was wiederum zu einer überlagerten sinusquadrat-förmigen Intensitätsmodulation auf den Empfangselementen führt. Der Effekt tritt in Richtung der polarisierenden Strukturen des Polarisators nur gering bis gar nicht auf, wohingegen er in 90°-Richtung zu diesen Strukturen sein Maximum erreicht. Dies bedeutet, dass sich die Achse dieses Fehlers mit der Drehung des Polarisators auf der Empfängerebene mit dreht. Der Effekt ist auf der Empfängerebene nicht symmetrisch.

Zur Kompensation dieses Fehlers können Fehlersignale, also insbesondere erste Summensignale, aus zwei verschiedenen Gruppen generiert werden. Eine der beiden Gruppen muss sich auf der Achse in Richtung der Struktur der polarisierenden Elemente auf dem Polarisator befinden. Da hier der Fehler praktisch nicht auftritt, liefert diese Gruppe das offsetkorrigierte Referenzsignal. Für die Generierung eines Inkrementalsignals würde die Auswertung dieser Gruppe bereits genügen, so dass die Signale vom Effekt betroffener Gruppen ignoriert werden könnten.

Zur Generierung eines Absolutsignals wird jedoch mindestens eine Gruppe, die sich auf einem beliebigen anderen Winkelbereich auf der Empfängerebene befindet, idealerweise um 90° versetzt dazu, benötigt.

Das Signal der zweiten Gruppe, das eine überlagerte Intensitätsmodulation seines Signals erfährt, kann korrigiert werden, indem die Differenz aus den Signalen beider Gruppen unter Berücksichtigung des Phasenversatzes von idealerweise 90° gebildet wird. Diese liefert das Fehlersignal zur Korrektur des Signals der zweiten Gruppe. Voraussetzung hierfür ist die vorherige Korrektur der Intensitätsschwankung durch das Taumeln des Polarisators sowie die Kenntnis der groben Winkelposition der Strukturen auf dem Polarisator, d. h. des absoluten öder wahlweise des inkrementalen Winkelsignals.

Alternativ ist die beschriebene Korrektur auch über die Differenz der jeweiligen Absolutsignale möglich.

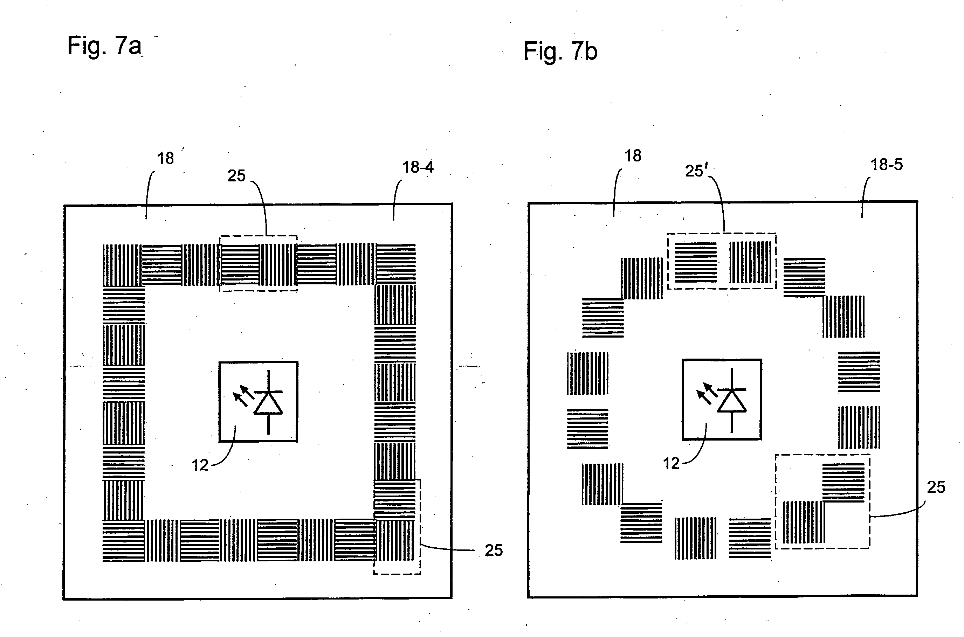

Figur 7a zeigt ein viertes Ausführungsbeispiel einer Sende-Empfangseinheit 18-4, welches Empfangselemente mit zwei unterschiedlichen Polarisationsrichtungen aufweist, wobei die beiden Polarisationsrichtungen insbesondere um 90° gegeneinander verdreht sind. Dabei sind die Empfangselemente symmetrisch um ein Symmetriezentrum angeordnet, welches vorliegend durch die optische Achse A der Lichtquelle 12 gebildet ist und bei Verwendung der Sende-Empfangseinheit 18-4 in der Vorrichtung 10 gemäß Figur 1a insbesondere mit der Drehachse D zusammenfällt. Die Empfangselemente sind insbesondere auf einer quadratischen Spur um das Symmetriezentrum angeordnet. Die Sende-Empfangseinheit 18-4 weist vierzehn Gruppen 25 mit jeweils zwei Empfangselementen auf, wobei in jeder Gruppe 25 die Polarisationsrichtungen der Empfangselemente jeweils um 90° gegeneinander verdreht angeordnet sind und insgesamt nur zwei verschiedene Polarisationsrichtungen vorhanden sind. Die Empfangselemente gleicher Polarisationsrichtung sind symmetrisch zueinander insbesondere im gleichen Winkelabstand bezüglich des Symmetriezentrums angeordnet. Insbesondere sind jeweils zwei Empfangselemente mit gleicher Polarisationsrichtung punktsymmetrisch angeordnet.

Figur 7b zeigt ein fünftes Ausführungsbeispiel einer Sende-Empfangseinheit 18-5 mit acht Gruppen 25' von Empfangselementen, wobei in jeder Gruppe 25' jeweils zwei Empfangselemente angeordnet sind, deren Polarisationsebenen um jeweils 90° zueinander verdreht sind, wobei insgesamt nur zwei verschiedene Polarisationsrichtungen vorhanden sind. Die Empfangselemente sind auf einer ringförmigen Spur um ein Symmetriezentrum angeordnet, wobei das Symmetriezentrum insbesondere durch die optische Achse A der Lichtquelle 12 und bei Verwendung der Sende-Empfangseinheit 18-5 in der Vorrichtung gemäß Figur la vorzugsweise durch die Drehachse D gebildet ist. Empfangselemente mit gleicher Polarisationsrichtung sind in jeweils gleichem Winkelabstand zueinander angeordnet. Jeweils zwei Empfangselemente mit gleicher Polarisationsrichtung sind punktsymmetrisch zum Symmetriezentrum zueinander angeordnet.

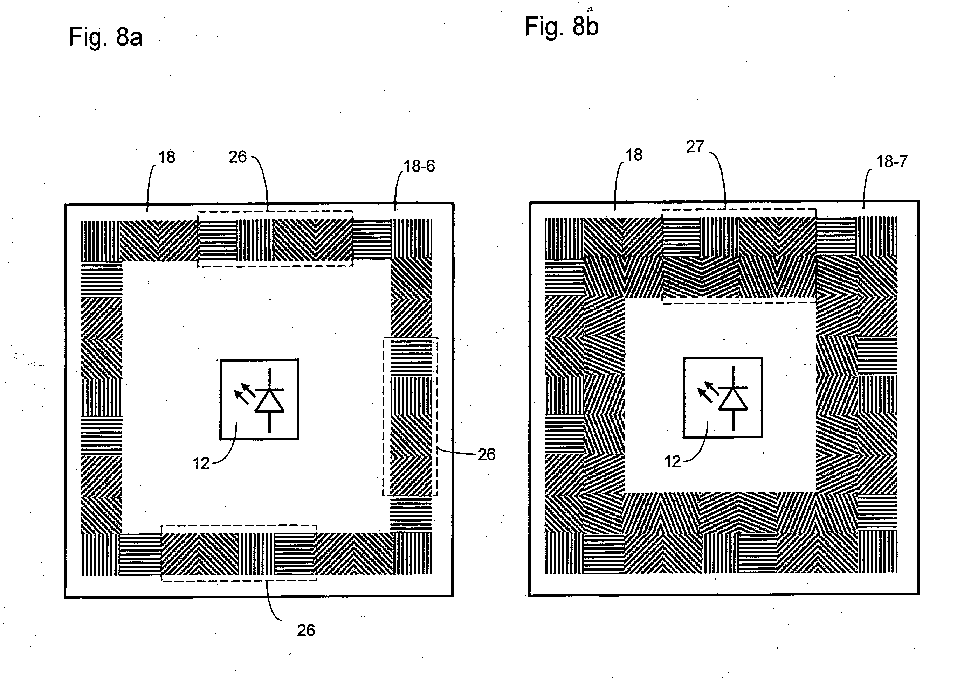

Figur 8a zeigt ein sechstes Ausführungsbeispiel einer Sende-Empfangseinheit 18-6 mit Empfangselementen mit vier verschiedenen Polarisationsrichtungen, wobei die Polarisationsrichtungen jeweils um 45° gegeneinander verdreht sind. Die Sende-Empfangseinheit 18-6 weist insgesamt sechs Gruppen 26 mit jeweils vier Empfangselementen auf, wobei in jeder Gruppe 26 die Polarisationsrichtungen der Empfangselemente um jeweils 45° gegeneinander verdreht sind, so dass insbesondere jede Gruppe 26 jeweils ein Empfangselement mit einer Polarisationsrichtung von 0°, ein Empfangselement mit einer Polarisationsrichtung von 45°, ein Empfangselement mit einer Polarisationsrichtung von 90° und ein Empfangselement mit einer Polarisationsrichtung von 135° aufweist. Die Empfangselemente sind symmetrisch zu einem Symmetriezentrum angeordnet, welches insbesondere durch die optische Achse A der Lichtquelle 12 oder die Drehachse D gebildet ist. Insbesondere sind jeweils zwei Empfangselemente mit gleicher Polarisationsrichtung punktsymmetrisch zueinander angeordnet.

Figur 8b zeigt ein siebtes Ausführungsbeispiel einer Sende-Empfangseinheit 18-7 mit Empfangselementen mit acht verschiedenen Polarisationsrichtungen in Gruppen 27, wobei die Polarisationsrichtungen jeweils um 22,5 ° gegeneinander verdreht sind und sich somit Polarisationsrichtungen bei 0°, 22,5°, 45°, 67,5°, 90°, 112,5°, 135°, 157,5° ergeben. Die Empfangselemente sind auf zwei konzentrisch zueinander angeordneten quadratischen Spuren um ein Symmetriezentrum angeordnet. Empfangselemente mit gleicher Polarisationsrichtung sind punktsymmetrisch zu dem Symmetriezentrum, insbesondere zu der optischen Achse A oder der Drehachse D angeordnet. Dabei weisen die Gruppen 27 nicht grundsätzlich jeweils sämtliche Polarisationsrichtungen auf, sondern können unterschiedliche viele Empfangselemente umfassen.

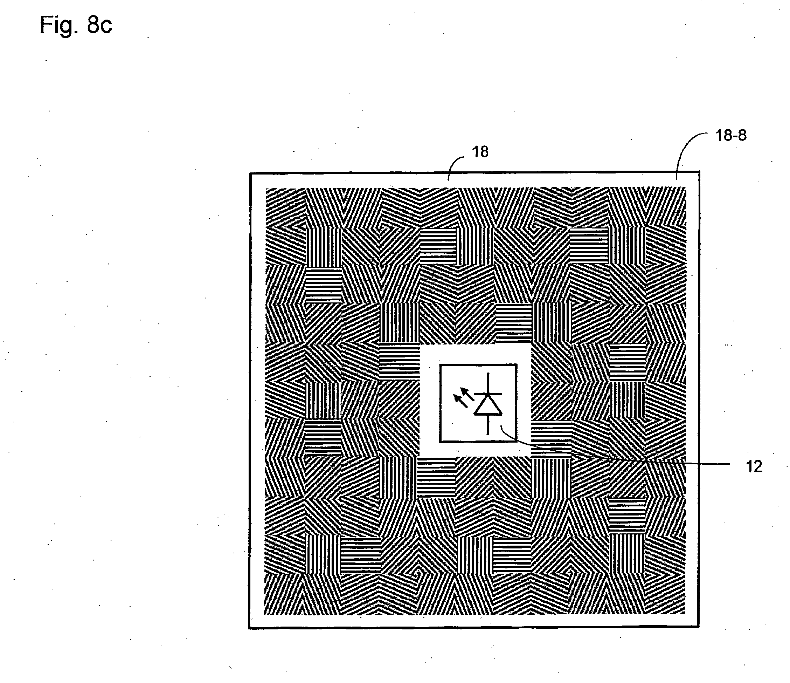

Figur 8c zeigt ein achtes Ausführungsbeispiel einer Sende-Empfangseinheit 18-8 mit Empfangselementen mit acht verschiedenen Polarisationsrichtungen, wobei die Polarisationsrichtungen jeweils um 22,5 ° gegeneinander verdreht sind und sich somit Polarisationsrichtungen bei 0°, 22,5°, 45°, 67,5°, 90°, 112,5°, 135°, 157, 5° ergeben. Die Empfangselemente sind dabei in insgesamt vier quadratischen Spuren in jeweils zwei verschachtelten Reihen symmetrisch um ein Symmetriezentrum angeordnet. Das Symmetriezentrum wird wiederum vorzugsweise durch die optische Achse A der Lichtquelle 12 und besonders bevorzugt durch die Drehachse D gebildet. Jeweils zwei Empfangselemente mit gleicher Polarisationsrichtung sind punktsymmetrisch zueinander um das Symmetriezentrum angeordnet.

Insgesamt lassen sich vorteilhafterweise für die Positionierung der einzelnen Empfangselemente bei Gruppen mit wenigstens zwei Empfangselementen einige einfache Regeln aufstellen:
Es sollten immer wenigstens zwei unmittelbar benachbarte Empfangselemente mit identischer photoempfindlicher Fläche und vorzugsweise 90° Phasenversatz der detektierbaren linearen Polarisation eine Gruppe bilden. Die genaue Lage oder Symmetrie der beiden ist zunächst unerheblich. Die Gruppe kann weitere Empfangselemente mit weiteren Polarisationsrichtungen aufweise. Diese Gruppe sollte sich mindestens ein weiteres Mal, vorzugsweise um 90° zur ersten Gruppe versetzt bezüglich des Symmetriezentrums, vorhanden sein. Um eine Offsetkompensation der Absolutsignale zu ermöglichen, sollte diese Gruppe insgesamt wenigstens vier Mal vorhanden sein, vorzugsweise im Winkelabstand von jeweils 90°. Idealerweise befinden sich jeweils identische Empfangselemente auf einer Geraden durch das Symmetriezentrum im gleichen Abstand zu dem Symmetriezentrum und somit punktsymmetrisch zueinander auf dem Träger. Die Empfangselemente sollten vorzugsweise jeweils gleiche photoempfindliche Fläche aufweisen.

Bei der Auswertung der Signalintensitäten ist vorzugsweise darauf zu achten, dass sich die Empfangselemente einer Gruppe in Abhängigkeit ihrer Geometrie an geringfügig unterschiedlichen Positionen bezüglich der Symmetriezentrums befinden. Dieser Umstand kann vernachlässigt werden, wenn die Größe der photoempfindlichen Fläche der Empfangselemente vergleichsweise klein ist und der zu erwartende Phasenfehler kleiner ist als die Genauigkeit der Vorrichtung zur Bestimmung des Drehwinkels. Falls die photoempfindlichen Flächen der Empfangselemente jedoch einen signifikanten Fehler hervorrufen könnten, kann eine rechnerische Korrektur mit A Priori Wissen um die Positionierung der Empfangselemente auf der Empfängerebene durchgeführt werden. Alternativ kann durch geeignete Positionierung der einzelnen Gruppen in einer redundanten Anordnung eine Kompensation des Effekts erreicht werden, indem die Intensität über mehrere identische benachbarte Empfangselemente gemittelt wird. Auch für die Helligkeitsverteilung in radialer Richtung kann es notwendig sein, eine Korrektur zwischen weiter innen und weiter außen liegenden Empfangselementen einzuführen oder dies ebenso durch Mittelung der Intensität mehrerer Empfangselemente oder Gruppen von Empfangselementen in unterschiedlicher Entfernung zum Symmetriezentrum zu kompensieren.

Je nach Anordnung der Empfangselemente entstehen ungenutzte Flächen, welche beispielsweise für Referenzphotodioden ohne Polarisationsempfindlichkeit genutzt werden können, um weitere Korrekturen oder Kompensationsmöglichkeiten speziell bei lokalen oder globalen Intensitätsschwankungen zu haben.

Die Empfangselemente sind schematisch jeweils immer quadratisch dargestellt. Die Geometrie, d. h. die flächige Ausgestaltung der Empfangselemente, kann je nach Anordnung und Fertigungstechnologie jedoch variiert werden. Beispielsweise sind Empfangselemente in Form von Quadraten, Rechtecken, Kreisen, Vielecken, Rauten oder ähnlichem möglich. Vorteilhaft für die Signalauswertung ist es jedoch, wenn die Empfangselemente jeweils die gleiche Form oder zumindest die gleiche Fläche aufweisen. Die einzelnen Empfangselemente können jedoch auch unterschiedlich große Flächen aufweisen. Dies ist insbesondere für eine Korrektur zwischen weiter innen liegenden und weiter außen liegenden Empfangselementen nützlich.

Die erfindungsgemäßen Vorrichtungen 10, 10' eignen sich insbesondere als sogenannte Kit-Lösung, bei welcher die Sende-Empfangseinheit 18-1, 18-2, 18-3, 18-4, 18-5, 18-6, 18-7, 18-8 mit der Lichtquelle 12 und dem Empfänger mechanisch von dem Polarisator 14 entkoppelt ist, da sie sich aufgrund der Möglichkeiten zur Korrektur bzw. Kompensation von Einflüssen mechanischer Toleranzen nahezu justagefrei aufbauen lässt. Insbesondere können durch die Entkopplung von dem Polarisator 14 und der Sende-Empfangseinheit 18-1, 18-2, 18-3, 18-4, 18-5, 18-6, 18-7, 18-8 unterschiedliche zulässige Temperaturbereiche für den Polarisator 14 einerseits und die Sende-Empfangseinheit 18-1, 18-2, 18-3, 18-4, 18-5, 18-6, 18-7, 18-8 andererseits realisiert werden.

### Bezugszeichenliste

- 10: Vorrichtung
- 10': Vorrichtung
- 12: Lichtquelle
- 14: Polarisator
- 16: Welle
- 18: Träger
- 18-1: Sende-Empfangseinheit
- 18-2: Sende-Empfangseinheit
- 18-3: Sende-Empfangseinheit
- 18-4: Sende-Empfangseinheit
- 18-5: Sende-Empfangseinheit
- 18-6: Sende-Empfangseinheit
- 18-7: Sende-Empfangseinheit
- 18-8: Sende-Empfangseinheit

- a: Empfangselement
- b: Empfangselement
- c: Empfangselement
- d: Empfangselement
- e: Empfangselement
- f: Empfangselement
- g: Empfangselement
- h: Empfangselement

- 21: erste Gruppe
- 22: zweite Gruppe
- 23: dritte Gruppe
- 24: vierte Gruppe
- 25: Gruppe
- 25': Gruppe
- 26: Gruppe
- 27: Gruppe

- α: erster Winkel
- β: zweiter Winkel

- D: Drehachse
- A: optische Achse
- N: Normale

## Patentansprüche

1. Vorrichtung (10) zur Messung des Drehwinkels zweier relativ zueinander um eine Drehachse (D) rotierender Objekte, mit einer dem einen Objekt zugeordneten Lichtquelle (12), mit einem Polarisator (14), wobei sich die Lichtquelle (12) und der Polarisator (14) in Abhängigkeit vom Drehwinkel relativ zueinander drehen, und mit einem Empfänger der die durch den Polarisator (14) durchtretende oder reflektierte Lichtintensität misst, um ein drehwinkelabhängiges Signal zu erzeugen, wobei der Empfänger wenigstens ein erstes Empfangselement (a) aufweist, vor welchem ein Polarisationsfilter mit einer ersten Polarisationsrichtung angeordnet ist,
**dadurch gekennzeichnet, dass** der Polarisator (14) als Scheibe mit einer Normalen (N) ausgebildet ist, wobei die Normale (N) der Scheibe in einem ersten von 0° verschiedenen Winkel (α) zu der Drehachse (D) angeordnet ist, und dass der Empfänger wenigstens ein zweites Empfangselement (c) aufweist, vor welchem ein Polarisationsfilter angeordnet ist, wobei das zweite Empfangselement (c) in einem Winkelabstand mit einem zweiten Winkel (β) zu dem ersten Empfangselement (a) angeordnet ist.

2. Vorrichtung nach Anspruch 1,
**dadurch gekennzeichnet, dass** der erste Winkel (α) größer als 0° und kleiner als 45° ist und vorzugsweise etwa 5° beträgt.

3. Vorrichtung nach einem der vorhergehenden Ansprüche,
**dadurch gekennzeichnet, dass** der zweite Winkel (β) 90° beträgt.

4. Vorrichtung nach einem der vorhergehenden Ansprüche,
**dadurch gekennzeichnet, dass** die Lichtquelle (12) eine optische Achse (A) aufweist, welche mit der Drehachse (D) übereinstimmt.

5. Vorrichtung nach einem der vorhergehenden Ansprüche,
**dadurch gekennzeichnet, dass** die Lichtquelle (12) in einer ersten Ebene angeordnet ist und der Empfänger in einer zweiten Ebene angeordnet ist, wobei die erste Ebene entweder der zweiten Ebene entspricht oder parallel versetzt zu dieser angeordnet ist.

6. Vorrichtung nach einem der vorhergehenden Ansprüche,
**dadurch gekennzeichnet, dass** die Lichtquelle (12) ein divergentes Strahlprofil und/oder ein rotationssymmetrisches Strahlprofil aufweist.

7. Vorrichtung nach einem der vorhergehenden Ansprüche,
**dadurch gekennzeichnet, dass** das erste Empfangselement (a) Teil einer ersten Gruppe (21) von n Empfangselementen ist (a, b), wobei vor jedem der n Empfangselemente (a, b) ein Polarisationselement angeordnet ist und die Polarisationsrichtungen der Polarisationselemente gegeneinander verdreht sind, vorzugsweise jeweils um 180°/n, wobei n die Anzahl der Empfangselemente (a, b) der ersten Gruppe (21) ist, und das zweite Empfangselement (c) Teil einer zweiten Gruppe (22) von m Empfangselementen (c, d) ist, wobei vor jedem der m Empfangselemente (c, d) ein Polarisationselement angeordnet ist und die Polarisationsrichtungen der Polarisationselemente gegeneinander verdreht sind, vorzugsweise jeweils um 180°/m, wobei m die Anzahl der Empfangselemente (c, d) der zweiten Gruppe (22) ist.

8. Vorrichtung nach einem der vorhergehenden Ansprüche,
**dadurch gekennzeichnet, dass** der Empfänger wenigstens vier oder mehr Gruppen mit Empfangselementen aufweist, wobei die Empfangselemente mit gleicher Polarisationsrichtung vorzugsweise symmetrisch, vorzugsweise um die Drehachse (D) oder die optische Achse (A), angeordnet sind.

9. Vorrichtung nach Anspruch 8,
**dadurch gekennzeichnet, dass** jeweils zwei Empfangselemente mit gleicher Polarisationsrichtung punktsymmetrisch, vorzugsweise zu der Drehachse (D) oder der optischen Achse (A), angeordnet sind.

10. Vorrichtung nach Anspruch 8 oder 9,
**dadurch gekennzeichnet, dass** die Empfangselemente auf wenigstens einer, vorzugsweise auf zwei oder mehreren, rechteckigen, vorzugsweise quadratischen, oder kreisförmigen Spuren, vorzugsweise um die Drehachse (D) oder die optische Achse (A), angeordnet sind.

11. Vorrichtung nach einem der vorhergehenden Ansprüche,
**dadurch gekennzeichnet, dass** der Empfänger eine oder mehrere Referenzphotodioden aufweist.

12. Vorrichtung nach einem der vorhergehenden Ansprüche,
**dadurch gekennzeichnet, dass** die Lichtquelle (12), der Empfänger und eine Auswerteschaltung als integrierte Schaltung ausgebildet sind.

13. Verfahren zur Messung des Drehwinkels zweier relativ zueinander um eine Drehachse (D) rotierender Objekte mit einer Vorrichtung (10, 10') gemäß einem der vorhergehenden Ansprüche, wobei die vom Empfänger gemessene Lichtintensität als drehwinkelabhängiges Signal ausgewertet wird,
**dadurch gekennzeichnet, dass** die von den einzelnen Empfangselementen gemessenen Lichtintensitäten als drehwinkelabhängige Signale ausgewertet werden.

14. Verfahren nach Anspruch 13,
**dadurch gekennzeichnet, dass** die Empfangssignale der Empfangselemente einer Gruppe zu einem ersten Summensignal summiert werden.

15. Verfahren nach Anspruch 14,
**dadurch gekennzeichnet, dass** aus den ersten Summensignalen zweier verschiedener Gruppen, insbesondere punktsymmetrisch zueinander angeordneter Gruppen, ein erstes Differenzsignal gebildet wird.

16. Verfahren nach einem der Ansprüche 13 bis 15,
**dadurch gekennzeichnet, dass** aus den Empfangssignalen zweier der Empfangselemente einer Gruppe, insbesondere zweier Empfangselemente, deren Polarisationsrichtungen senkrecht zueinander stehen, ein zweites Differenzsignal gebildet wird.

17. Verfahren nach Anspruch 16,
**dadurch gekennzeichnet, dass** aus zwei zweiten Differenzsignalen zweier verschiedener Gruppen, insbesondere punktsymmetrisch zur Drehachse zueinander angeordneter Gruppen, ein zweites Summensignal gebildet wird.

18. Verfahren nach einem der Ansprüche 13 bis 17,
**dadurch gekennzeichnet, dass** die Empfangssignale der Empfangselemente, welche gleiche Polarisationsrichtungen aufweisen, gemittelt werden.

## Claims

1. Device (10) for measuring the relative angle of two objects which can be rotated relative to each other around a rotation axis (D), having a light source (12) associated with one object and a polarizer (14), wherein the light source (12) and the polarizer (14) are rotated relative to each other depending on the rotation angle, and having a receiver which measures the light intensity reflected or passing through the polarizer (14), in order to generate a rotation angle-dependent signal, wherein the receiver has at least one first receiving element (a), before which a polarization filter with a first polarization direction is arranged, **characterized in that** the polarizer (14) is formed as a disk with a normal (N), the normal (N) of the disk being arranged at a first angle (α), different from 0°, to the rotation axis (D), and **in that** the receiver has at least one second receiving element (c), before which a polarization filter is arranged, the second receiving element (c) being disposed at an angular distance with a second angle (ß) to the first receiving element (a).

2. Device according to claim 1, **characterized in that** the first angle (α) is greater than 0° and less than 45° and preferably approximately 5°.

3. Device according to any one of the above claims, **characterized in that** the second angle (ß) is 90°.

4. Device according to any one of the above claims, **characterized in that** the light source (12) has an optical axis (A), which corresponds to the rotation axis (D).

5. Device according to any one of the above claims, **characterized in that** the light source (12) is arranged in a first plane and the receiver is arranged in a second plane, the first plane corresponding either to the second plane or positioned parallel offset to this.

6. Device according to any one of the above claims, **characterized in that** the light source (12) has a divergent radiation profile and/or a rotationally symmetric radiation profile.

7. Device according to any one of the above claims, **characterized in that** the first receiving element (a) is part of a first group (21) of n receiving elements (a, b), a polarization element being arranged before each of the n receiving elements (a, b) and the polarization directions of the polarization elements being turned against each other, preferably in each case by 180°/n, where n is the number of receiving elements (a, b) of the first group (21), and the second receiving element (c) is part of a second group (22) of m receiving elements (c, d), a polarization element being arranged before each of the m receiving elements (c, d) and the polarization directions of the polarization elements being turned against each other, preferably in each case by 180°/m, where m is the number of receiving elements (c, d) of the second group (22).

8. Device according to any one of the above claims, **characterized in that** the receiver has at least four or more groups with receiving elements, wherein the receiving elements are arranged with same polarization direction, preferably symmetrically, preferably around the rotation axis (D) or the optical axis (A).

9. Device, according to claim 8, **characterized in that** in each case two receiving elements with same polarization direction are arranged point-symmetrically, preferably to the rotation axis (D) or the optical axis (A).

10. Device according to claim 8 or 9, **characterized in that** the receiving elements are arranged on at least one, preferably two or more, rectangular, preferably square, or circular orbits, preferably around the rotation axis (D) or the optical axis (A).

11. Device according to any one of the above claims, **characterized in that** the receiver has one or more reference photodiodes.

12. Device according to any one of the above claims, **characterized in that** the light source (12), the receiver and an evaluation circuit are formed as integrated circuit.

13. Method for measuring the relative angle of two objects which can be rotated relative to each other around a rotation axis (D) having a device (10, 10'), according to any one of the above claims, wherein the light intensity measured by the receiver is evaluated as rotation angle-dependent signal, **characterized in that** the light intensities measured by the individual receiving elements are evaluated as rotation angle-dependent signals.

14. Method according to claim 13, **characterized in that** the received signals of the receiving elements of a group are summed to form a first sum signal.

15. Method according to claim 14, **characterized in that** a first difference signal is formed from the first sum signals of two different groups, in particular groups arranged with each other point-symmetrically.

16. Method according to any one of claims 13 to 15, **characterized in that** a second difference signal is formed from the received signals of two of the receiving elements of a group, in particular two receiving elements, the polarization directions of which are perpendicular to each other.

17. Method according to claim 16, **characterized in that** a second sum signal is formed from two second difference signals of two different groups, in particular groups arranged with each other point-symmetrically to the rotation axis.

18. Method according to any one of claims 13 to 17, **characterized in that** the received signals of the receiving elements, which have same polarization directions, are averaged.

## Revendications

1. Dispositif (10) pour mesurer l'angle de rotation de deux objets tournant l'un par rapport à l'autre autour d'un axe de rotation (D), ayant une source lumineuse (12) associée à un objet, un polariseur (14), la source lumineuse (12) et le polariseur (14) tournant l'un par rapport à l'autre en fonction de l'angle de rotation ainsi qu'un récepteur mesurant l'intensité lumineuse traversant le polariseur (14) ou réfléchie par celui-ci, pour générer un signal dépendant de l'angle de rotation, le récepteur ayant au moins un premier élément de réception (a) précédé d'un filtre de polarisation pour une première direction de polarisation,
dispositif **caractérisé en ce que**
le polariseur (14) est un disque ayant une normale (N) installée suivant un premier angle (α) par rapport à l'axe de rotation (D), cet angle étant différent de 0°, et
le récepteur comporte au moins un second élément récepteur (c) précédé d'un filtre de polarisation, ce second élément récepteur (c) étant à une seconde distance angulaire (β) par rapport au premier élément récepteur (a).

2. Dispositif selon la revendication 1,
**caractérisé en ce que**
le premier angle (α) supérieur à 0° et inférieur à 45° est de préférence de l'ordre de 5°.

3. Dispositif selon l'une des revendications précédentes,
**caractérisé en ce que**
le second angle (β) est égal à 90°.

4. Dispositif selon l'une des revendications précédentes,
**caractérisé en ce que**
la source lumineuse (12) a un axe optique (A) coïncidant avec l'axe de rotation (D).

5. Dispositif selon l'une des revendications précédentes,
**caractérisé en ce que**
la source lumineuse (12) se trouve dans un premier plan et le récepteur est dans un second plan, le premier plan correspondant au second plan ou étant décalé parallèlement à celui-ci.

6. Dispositif selon l'une des revendications précédentes,
**caractérisé en ce que**
la source lumineuse (12) a un profil de rayonnement divergent et/ou un profil de rayonnement symétrique en rotation.

7. Dispositif selon l'une des revendications précédentes,
**caractérisé en ce que**
le premier élément récepteur (a) fait partie d'un premier groupe (21) de (n) éléments récepteurs, (a, b), et chacun des (n) éléments récepteurs (a, b) est précédé d'un élément de polarisation et les directions de polarisation des éléments de polarisation sont tournées l'une par rapport à l'autre de préférence chaque fois de 180°/n, (n) étant le nombre d'éléments récepteurs (a, b) du premier groupe (21) et le second élément récepteur (c) fait partie d'un second groupe (22) de (m) éléments récepteurs (c, d) et chacun des (m) éléments récepteurs (c, d) est précédé d'un élément de polarisation, les directions de polarisation des éléments de polarisation étant tournées l'une par rapport à l'autre, de préférence chaque fois d'un angle de 180°/m, (m) étant le nombre d'éléments récepteurs (c, d) du second groupe (22).

8. Dispositif selon l'une des revendications précédentes,
**caractérisé en ce que**
le récepteur comporte au moins quatre ou plus de groupes d'éléments récepteurs, les éléments récepteurs de même direction de polarisation étant de préférence symétriques par rapport à l'axe de rotation (D) ou à l'axe optique (A).

9. Dispositif selon la revendication 8,
**caractérisé en ce que**
chaque fois deux éléments récepteurs de même direction de polarisation sont symétriques par rapport à un point, de préférence par rapport à l'axe de rotation (D) ou à l'axe optique (A).

10. Dispositif selon la revendication 8 ou 9,
**caractérisé en ce que**
les éléments récepteurs se trouvent sur au moins une trace, de préférence sur deux ou plusieurs traces rectangulaires de préférence carrées ou circulaires, de préférence autour de l'axe de rotation (D) ou de l'axe optique (A).

11. Dispositif selon l'une des revendications précédentes,
**caractérisé en ce que**
l'élément récepteur a une ou plusieurs photodiodes de référence.

12. Dispositif selon l'une quelconque des revendications précédentes,
**caractérisé en ce que**
la source lumineuse (12), le récepteur et un circuit d'exploitation sont réalisés sous la forme d'un circuit intégré.

13. Procédé de mesure de l'angle de rotation de deux objets tournant l'un par rapport à l'autre autour d'un axe de rotation (D) avec un dispositif (10, 10') selon l'une des revendications précédentes selon lequel l'intensité lumineuse mesurée par le récepteur est exploitée comme signal dépendant de l'angle de rotation,
procédé **caractérisé en ce que**
les intensités lumineuses mesurées par les différents éléments récepteurs sont exploitées comme des signaux dépendant de l'angle de rotation.

14. Procédé selon la revendication 13,
**caractérisé en ce que** les signaux reçus par les éléments récepteurs d'un groupe sont additionnés pour former un premier signal de somme.

15. Procédé selon la revendication 14,
**caractérisé en ce qu'**
on forme un premier signal de différence avec les premiers signaux de somme de deux groupes différents, en particulier de groupes installés de manière symétrique par rapport à un point.

16. Procédé selon l'une des revendications 13 à 15,
**caractérisé en ce qu'**
on forme un second signal de différence avec les signaux reçus de deux éléments récepteurs d'un groupe, notamment de deux éléments récepteurs dont les directions de polarisation sont perpendiculaires l'une à l'autre.

17. Procédé selon la revendication 16,
**caractérisé en ce qu'**
on forme un second signal de somme avec deux seconds signaux de référence de deux groupes différents, notamment de groupes symétriques l'un par rapport à l'autre par une symétrie par point par rapport à l'axe de rotation.

18. Procédé selon l'une des revendications 13 à 17,
**caractérisé en ce qu'**
on fait la moyenne des signaux reçus par les éléments récepteurs et qui correspondent à la même direction de polarisation.
